# EUROPÄISCHE PATENTSCHRIFT

(11) **EP 3 445 543 B1**
(45) Veröffentlichungstag und Bekanntmachung des Hinweises auf die Patenterteilung: **07.09.2022**
(21) Anmeldenummer: 17718965.1
(22) Anmeldetag: 27.04.2017
(51) Int. Cl.: B25J 17/02, B25J 9/12, B25J 9/10, B25J 9/08, B25J 19/00, B25J 9/00

(54) **MOTORISIERTES GELENK FÜR EINEN PROGRAMMIERBAREN BEWEGUNGSAUTOMATEN**
MOTORIZED JOINT FOR A PROGRAMMABLE AUTOMATED MOVING DEVICE
ARTICULATION MOTORISÉE POUR UN AUTOMATE DE DÉPLACEMENT PROGRAMMABLE

(30) Priorität: 27.04.2016 LU 93046
(43) Veröffentlichungstag der Anmeldung: 27.02.2019
(73) Patentinhaber: Ovalo GmbH, 65555 Limburg (DE)
(72) Erfinder: GILGES, Siegmar, 65307 Bad Schwalbach (DE)
(74) Vertreter: Hoffmann, Jürgen
(86) Internationale Anmeldenummer: PCT/EP2017/060054
(87) Internationale Veröffentlichungsnummer: WO 2017/186847

(56) Entgegenhaltungen:
- EP-A1- 0 112 963
- WO-A1-2013/138912
- WO-A2-01/38047
- US-A- 4 577 127
- ALBU-SCHÄFFER A ET AL: "The DLR lightweight robot: design and control concepts for robots in human environments", INDUSTRIAL ROBOT: AN INTERNATIONAL JOURNAL, MCB UNIV. PRESS, BRADFORD, Bd. 34, Nr. 5, 1. Januar 2007 (2007-01-01) , Seiten 376-385, XP008178983, ISSN: 0143-991X, DOI: 10.1108/01439910710774386
- Marc Manz ET AL: "DEVELOPMENT OF A LIGHTWEIGHT MANIPULATOR ARM USING HETEROGENEOUS MATERIALS AND MANUFACTURING TECHNOLOGIES", Proceedings of the International Symposium on Artificial Intelligence, Robotics and Automation in Space (i-SAIRAS 2012), 6. September 2012 (2012-09-06), XP055337039, Turin Gefunden im Internet: URL:http://robotics.estec.esa.int/i-SAIRAS /isairas2012/Papers/Session%205B/05B_04_Ma nz.pdf [gefunden am 2017-01-19]

## Beschreibung

Die Erfindung betrifft ein motorisiertes Gelenk zum Verbinden von zwei relativ zueinander beweglichen Trägern eines programmierbaren Bewegungsautomaten, das zwei relativ zueinander bewegliche Gehäuseteile, einen Antriebsmotor und ein dem Antriebsmotor triebtechnisch nachgeschaltetes Getriebe aufweist, das ein Spannungswellengetriebe ist.

Aus US 8,614,559 B2 ist ein programmierbares Robotersystem bekannt. Das Robotersystem beinhaltet einen Roboter mit einer Anzahl von einzelnen Armabschnitten, wobei benachbarte Armabschnitte jeweils durch ein Gelenk miteinander verbunden sind. Das Robotersystem umfasst ferner in wenigstens einem Gelenk einen steuerbaren Antrieb sowie ein Steuersystem zum Steuern der Antriebe. Das Robotersystem weist außerdem eine Benutzerschnittstelle auf, über die das Robotersystem programmiert werden kann. Das Gelenk weist ein Gehäuse und einen in dem Gehäuse angeordneten Motor mit einer Motorwelle auf, die relativ zu dem Gehäuse rotiert. In dem Gehäuse befindet sich außerdem eine Sicherheitsbremse. Die Gelenke des Robotersystems sind vollkommen unsymmetrisch derart aufgebaut, dass ein Gelenkteil äußerst raumgreifend und klobig ausgebildet ist, während der jeweils andere Gelenkteil äußerst kein ausgebildet ist.

Aus WO 01/38047 A2 ist ein Greif- oder Betätigungsarm mit mindestens zwei Gliedern, die jeweils mittels eines elektromotorischen Antriebs relativ zueinander und/oder zu einer Basis beweglich, sind, bekannt. Die Antriebe sind zur Durchführung definierter Bewegungen der Glieder getrennt steuerbar. Es ist jeweils eine Sensoranordnung zur Ermittlung der Relativstellung zweier benachbarter Glieder vorgesehen ist. Dabei sind die Antriebe als Antriebseinheiten ausgebildet, die jeweils mindestens einen Elektromotor, die zur Betätigung des Elektromotors notwendige Motorsteuerung, gegebenenfalls ein Getriebe und die Sensoranordnung aufweisen. Ferner sind die Antriebe sämtlicher Glieder seriell nach Art einer Busanordnung derart hintereinander geschaltet, dass die zur Betätigung der Antriebe notwendige Energie und die Steuersignale über die Busanordnung übertragbar sind.

Aus der wissenschaftlichen Publikation Albu-Schäffer et al., "DLR lightweight robot: design and control concepts for robots in human environments", Industrial Robot, Bd. 34, Nr. 5, 01.01.2017, ist ein leichtgewichtiger, gelenkiger Roboterarm bekannt, der mehrere Antriebsmotore und mehrere Spannungswellengetriebe beinhaltet.

Aus EP 0 112 963 A1 ist ein Drehstellantrieb insbesondere für den Einsatz in Robotern bekannt. Der Drehstellantrieb beinhaltet einen Antriebsmotor und ein Spannungswellengetriebe.

Aus WO 2013/138912 A1 ist eine Orthese mit einem Antriebsmotor, einem Spannungswellengetriebe und einer drehmomentbegrenzenden Bremse bekannt.

Aus US 4 577 127 A ist ein elektrischer Aktuator bekannt, dem ein Drehmelder zugeordnet ist. Der Aktuator umfasst ein stationäres und ein drehbares Gehäuse und einen darin befindlichen Elektromotor. Der Elektromotor treibt das drehbare Gehäuse über einen drehzahlreduzierenden Harmonic-Drive-Mechanismus an.

Es ist die Aufgabe der vorliegenden Erfindung eine Möglichkeit anzugeben, ein motorisiertes Gelenk der eingangs genannten Art insbesondere im Hinblick auf das Abstützen der wirkenden Kräfte und/oder Momente vorteilhafter ausbilden zu können.

Die Aufgabe wird durch ein motorisiertes Gelenk gelöst, das dadurch gekennzeichnet ist, dass das Spannungswellengetriebe als Ringgetriebe mit einem sich in beide Gehäuseteile erstreckenden Antriebselement, nämlich einem Wellengenerator, ausgebildet ist und dass ein erster innenverzahnter Stützring des Getriebes in einem der Gehäuseteile angeordnet ist und ein zweiter innenverzahnter Stützring des Getriebes in dem anderen Gehäuseteil angeordnet ist.

Die Erfindung hat den besonderen Vorteil, dass die Gehäuseteile symmetrisch und/oder baugleich und/oder gleich groß ausgebildet sein können. Insbesondere ist es nicht erforderlich, dass einer der Gelenkteile besonders klobig ausgebildet ist, weil er sämtliche Elemente sowohl des Antriebsmotors, als auch des Getriebes und der Feststellvorrichtung aufnehmen muss. Eine Ausführung, bei der die Gehäuseteile baugleich sind, kann kostengünstiger hergestellt werden, weil mit denselben Herstellungswerkzeugen beide Gehäuseteile gefertigt werden können und daher keine unterschiedlichen Herstellungswerkzeuge erforderlich sind.

Ein ganz besonderer Vorteil der Erfindung besteht darin, dass die Ebenen, innerhalb denen sich die Längsmittelachsen der Träger bewegen, einen geringeren Abstand zueinander aufweisen können. Dies hat den weiteren besonderen Vorteil, dass im Betrieb wenigstens auf einen der Träger ein geringeres Torsionsmoment einwirkt. Der Träger kann daher filigraner und/oder bauraumsparender dimensioniert werden.

Insbesondere erlaubt es die Erfindung, ein motorisiertes Gelenk hinsichtlich der Anordnung der Antriebs- und Getriebebauteile flexibler und insbesondere anwendungsspezifisch vorteilhaft auszubilden. Insbesondere ist es beispielsweise bei einer Ausführung als Scharniergelenk ermöglicht, Bauteile aus dem Zwischenraum zwischen den Ebenen, innerhalb denen sich die Längsmittelachsen der Träger bewegen, heraus zu verlagern, so dass die Ebenen, wie bereits erwähnt, einen geringeren Abstand zueinander aufweisen können. Unter einem Scharniergelenk wird ein Gelenk verstanden, das eine Drehbewegung in, insbesondere ausschließlich, einem Freiheitsgrad zulässt.

Bei einer besonderen Ausführung weist das motorisierte Gelenk eine Feststellvorrichtung auf, die dazu ausgebildet und angeordnet ist, das Gelenk zu arretieren. Die Feststellvorrichtung kann insbesondere dazu dienen, das Gelenk in einem Notfall oder zum Durchführen einer Reparatur zu versteifen. Insbesondere kann die Feststellvorrichtung vorteilhaft dazu ausgebildet sein, die mittels des Gelenks verbundenen Träger im laufenden Betrieb relativ zueinander zunächst abzubremsen und dann zu arretieren.

Die Feststellvorrichtung kann insbesondere dazu ausgebildet und angeordnet sein, unmittelbar ein Getriebebauteil abzubremsen. Dies hat den ganz besonderen Vorteil, dass ein präzises Abbremsen und Arretieren der Träger möglich ist, wobei die Bewegungsenergie der sich relativ zueinander bewegenden Träger und die Rotationsenergie der rotierenden Getriebebauteile unmittelbar und insbesondere unter Ausschluss der Abtriebswelle des Antriebsmotors, beispielsweise in ein Chassis oder ein Gehäuse, abgeleitet werden können. Die Abtriebswelle des Antriebsmotors ist auf diese Weise bei einem Abbremsvorgang zumindest teilweise von diesbezüglichen Kraft- und/oder Drehmomenteinwirkungen entkoppelt und kann daher dünner, leichter und besonders bauraumsparend ausgebildet sein. Insbesondere bei einer solchen Ausführung kann die Feststellvorrichtung vorteilhaft in demselben Gehäuseteil angeordnet sein, wie das Getriebe oder wenigstens wie der abzubremsende Teil des Getriebes. Es ist jedoch auch möglich, dass die Feststellvorrichtung in dem anderen Gehäuseteil angeordnet ist und dass ein Sperrmittel, wie beispielsweise ein Sperrenstift, lediglich in der Arretierstellung in das Gehäuseteil ragt, in dem sich das unmittelbar zu arretierende Getriebebauteil befindet.

Bei einer anderen Ausführung ist die Feststellvorrichtung dazu ausgebildet und angeordnet, unmittelbar den Antriebsmotor oder eine Abtriebswelle des Antriebsmotors abzubremsen. Insbesondere bei einer solchen Ausführung kann die Feststellvorrichtung vorteilhaft in demselben Gehäuseteil angeordnet ist, wie der Antriebsmotor oder in demselben Teil wie die Abtriebswelle. Es ist jedoch auch möglich, dass die Feststellvorrichtung in dem anderen Gehäuseteil angeordnet ist und dass ein Sperrmittel, wie beispielsweise ein Sperrenstift, lediglich in der Arretierstellung in das Gehäuseteil ragt, in dem sich der Antriebsmotor bzw. die Abtriebswelle befindet.

Erfindungsgemäß ist das Getriebe als Spannungswellengetriebe ausgebildet. Eine solche Ausführung hat den ganz besonderen Vorteil, dass ein besonders präzises Einstellen der beweglichen Träger relativ zueinander ermöglicht ist. Hierbei wird vorteilhaft ausgenutzt, dass Spannungswellengetriebe spielfrei sind und daher die vom Antriebsmotor erzeugten Drehmomente, insbesondere auch bei einer Richtungsumkehr, unmittelbar in eine entsprechende Relativbewegung der Träger übersetzt werden können.

Das mittels der Feststellvorrichtung abbremsbare Getriebebauteil kann beispielsweise ein Wellengenerator des Spannungswellengetriebes sein. Alternativ ist es auch möglich, langsamer rotierende Getriebebauteile abzubremsen und zu arretieren. Von besonderem Vorteil ist eine Ausführung, bei der das mittels der Feststellvorrichtung abbremsbare Getriebebauteil ein Flexspline, ein Circularspline oder ein Dynamicspline des Spannungswellengetriebes ist. Bei einer solchen Ausführung können die auftretenden Kräfte und Momente auf sehr kurzem Weg und bei sehr geringer Belastung der triebtechnisch vorgelagerten Bauteile auf ein Gehäuse oder ein Chassis abgeleitet werden.

Das Spannungswellengetriebe ist als Ringgetriebe ausgebildet. Es bietet es sich an, einen Circularspline oder einen Dynamicspline als Getriebeabtrieb auszulegen und direkt oder indirekt mit einem der Träger drehfest zu verbinden.

Bei einer ganz besonders vorteilhaften Ausführung lässt die Feststellvorrichtung im zugeschalteten Zustand bei Auftreten eines abtriebsseitigen Drehmomentes mit einem Wert über einem vorgegebenen oder vorgebbaren Wert zur Vermeidung einer Beschädigung eines Abtriebselements des Spannungswellengetriebes und der weiteren im Kraftfluss liegenden Bauteile des motorisierten Gelenks eine Bewegung des mittels der Feststellvorrichtung arretierten Getriebebauteils zu. Beispielsweise kann vorteilhaft vorgesehen sein, dass sich ein Sperrring beim Auftreten einer Überlast relativ zu dem zu arretierenden Bauteil, insbesondere unter Überwindung einer Reibkraft, drehen kann.

Der vorgegebene Wert entspricht vorzugsweise dem maximal zulässigen Betriebsdrehmoment, das an dem zu arretierenden Bauteil auftreten darf. Der Wert kann insbesondere auch unterhalb dieses Wertes liegen, um ein Sicherheitspolster zu implementieren. Insbesondere ist der vorgegebene Wert vorzugsweise derart gewählt, dass eine Beschädigung des Gelenks und/oder des Getriebes ausgeschlossen ist.

Eine solche Ausführung hat den ganz besonderen Vorteil, dass Drehmomentspitzen, die auf das Abtriebselement oder die weiteren im Kraftfluss liegenden Bauteile wirken, abgebaut werden können, ohne dass es zu einer Beschädigung des motorisierten Gelenks kommt. Zu derartigen Drehmomentspitzen kann es insbesondere im zugeschalteten Zustand der Feststellvorrichtung kommen, wenn äußere Kräfte auf die mittels des motorisierten Gelenks verbundenen Träger einwirken. Auf diese Weise kann vorteilhaft eine Beschädigung des motorisierten Gelenks, insbesondere des Spannungswellengetriebes des motorisierten Gelenks, vermieden werden, ohne dass das motorisierte Gelenk, und insbesondere die Getriebebauteile des Spannungswellengetriebes, vorsorglich überdimensioniert werden müssten, um die oben genannten Drehmomentspitzen verkraften zu können. Insoweit kann das motorisierte Gelenk - und insbesondere dessen Spannungswellengetriebe - vorteilhaft bei gleicher Lebensdauer seiner Komponenten kompakt, kleinbauend und bauraumsparend ausgebildet werden.

Die Feststellvorrichtung kann vorteilhaft als reibschlüssige Bremse ausgebildet sein oder zumindest eine reibschlüssige Bremse aufweisen. Hierdurch kann in einfacher und zuverlässiger Weise das arretierte Getriebebauteil in Stillstand gehalten werden, wobei jedoch beim Auftreten von besonders hohen Drehmomenten, insbesondere von Drehmomenten die einen vorgegebenen Wert überschreiten, ein Durchrutschen der reibschlüssigen Bremse erfolgt, so dass das arretierte Getriebebauteil und die weiteren im Kraftfluss liegenden Bauteile vor einer Beschädigung bewahrt bleiben.

Beispielsweise kann die Feststellvorrichtung eine Scheibenbremse aufweisen. Bei einer vorteilhaften Ausführung weist die Scheibenbremse eine Bremsscheibe auf, die drehfest mit dem abzubremsenden Getriebebauteil verbunden ist. Darüber hinaus kann ein Bremskrafterzeuger vorhanden sein, der auf die Bremsscheibe wirkt und der sich direkt oder indirekt an einem Gehäuse oder an einem Chassis des Spannungswellengetriebes und/oder des motorisierten Gelenks abstützt. Die Bremsscheibe kann vorteilhaft drehfest, jedoch in axialer Richtung verschiebbar auf einem mit dem abzubremsenden Getriebebauteil verbundenen Mitnehmer gelagert sein.

Der Bremskrafterzeuger kann beispielsweise in der Weise ausgebildet sein, dass er im zugeschalteten Zustand der Feststellvorrichtung ein Reibelement axial oder radial gegen die Bremsscheibe drückt. Insbesondere hierzu kann der Bremskrafterzeuger wenigstens einen Magneten, insbesondere einen Permanentmagneten und/oder einen Elektromagneten und/oder wenigstens ein Federelement aufweisen.

Bei einer besonderen Ausführung ist zum Lösen der Feststellvorrichtung eine, insbesondere elektrisch aktivierbare, Lösevorrichtung vorhanden. Beispielsweise kann die Lösevorrichtung einen Elektromagneten aufweisen, mittels dem das Reibelement von der Bremsscheibe, insbesondere gegen die Rückstellkraft eines Bremskrafterzeugers, entfernt werden kann.

Bei einer ganz besonders vorteilhaften Ausführung weist die Feststellvorrichtung ein Sperrmittel auf, das reibschlüssig mit dem abzubremsenden Getriebebauteil verbunden ist. Das Sperrmittel kann vorteilhaft ein Formschlussmittel aufweisen, das im zugeschalteten Zustand der Feststellvorrichtung formschlüssig mit einem relativ zu einem Gehäuse oder einem Chassis des motorisierten Gelenks, insbesondere einem Gehäuse oder einem Chassis des Spannungswellengetriebes des motorisierten Gelenks, drehfesten Gegenformschlussmittel zusammenwirkt. Das Sperrmittel kann beispielsweise als Ring ausgebildet sein, der als Formschlussmittel wenigstens eine Ausnehmung aufweist, in die das Gegenformschlussmittel, beispielsweise in Form eines ausfahrbaren Sperrenstiftes, eingreifen kann. In vorteilhafter Weise kann das Sperrmittel mehrere Formschlussmittel, beispielsweise mehrere Ausnehmungen, aufweisen, so dass ein Eingreifen des Gegensperrmittels in unterschiedlichen Drehstellungen des abzubremsenden Getriebebauteils ermöglicht ist.

Das Sperrmittel kann vorteilhaft, beispielsweise als Ring, koaxial zu dem abzubremsenden Getriebebauteil angeordnet sein.

Zum Erzeugen oder zum Erhöhen der Reibkraft zwischen dem Sperrmittel einerseits und dem abzubremsenden Getriebebauteils andererseits kann vorteilhaft ein Vorspannmittel vorhanden sein. Beispielsweise kann das Vorspannmittel in der Weise ausgebildet sein, dass es das Sperrmittel, insbesondere axial, gegen das abzubremsende Getriebebauteil drückt. Insbesondere kann vorteilhaft vorgesehen sein, dass das Vorspannmittel gegen eine Rückstellkraft, beispielsweise eines Magneten und/oder einer Feder, wirkt.

Alternativ kann beispielsweise auch vorgesehen sein, dass das Sperrmittel über das Vorspannmittel reibschlüssig mit dem abzubremsenden Getriebebauteil verbunden ist und sich das Vorspannmittel einerseits an dem Sperrmittel und andererseits an dem abzubremsenden Getriebebauteil abstützt. Das Vorspannmittel kann beispielsweise wenigstens ein vorgespanntes oder vorspannbares Federelement beinhalten.

Insbesondere kann das Vorspannmittel vorteilhaft als einstellbares Vorspannmittel ausgebildet sein. Hierzu kann beispielsweise eine Spannschraube vorhanden sein, mittels der die Vorspannung der Feder eingestellt werden kann.

Insbesondere kann das Vorspannmittel wenigstens ein Federelement aufweisen, wobei wenigstens ein Teil der Reibkraft durch eine Rückstellkraft des vorgespannten Federelements bewirkt wird.

Das Vorspannmittel kann beispielsweise eine Tellerfeder aufweisen. Bei einer ganz besonders vorteilhaften Ausführung weist das Vorspannmittel ein gewelltes und/oder elastisches und/oder zylinderförmig gebogenes Band, insbesondere Blechband auf. Das Band kann insbesondere radial zwischen dem Sperrmittel einerseits und dem abzubremsenden Getriebebauteil andererseits angeordnet sein. Solange ein vorgegebener Wert des Drehmoments nicht überschritten wird, stellt das vorgespannte Band reibschlüssig eine drehfeste Verbindung zwischen dem Sperrmittel einerseits und dem abzubremsenden Getriebebauteil andererseits her. Wird der vorgegebene Wert überschritten, kann sich das Sperrelement die Reibkraft überwindend relativ zu dem abzubremsenden Getriebebauteil drehen. In ähnlicher Weise kann das Vorspannmittel alternativ auch als vorgespannter, geschlitzter Ring ausgebildet und angeordnet sein.

Wie bereits erwähnt, kann vorteilhaft vorgesehen sein, dass das Gegenformschlussmittel einen, insbesondere entlang seiner Längserstreckungsrichtung radial oder axial, bewegbaren Sperrenstift aufweist, dessen freies Ende in zugeschaltetem Zustand der Feststellvorrichtung in eine Rastausnehmung des Formschlussmittels eingreift.

Von besonderem Vorteil ist ein programmierbarer Bewegungsautomat mit zwei Trägern, die mittels eines erfindungsgemäßen motorisierten Gelenks relativ zueinander beweglich verbunden sind. Hierbei kann insbesondere vorteilhaft vorgesehen sein, dass einer der Träger direkt oder indirekt drehfest mit einem Stator des Antriebsmotors und/oder einem Antriebsmotorgehäuse des Antriebsmotors verbunden ist, während der andere der Träger drehfest an ein Abtriebselement des Spannungswellengetriebes angekoppelt ist. Die zwei mittels des motorisierten Gelenks beweglich verbundenen Träger können beispielsweise Teil eines Roboterarmes sein.

Bei einer besonderen Ausführung beinhaltet das motorisierte Gelenk wenigstens einen an die Feststellvorrichtung angeschlossenen oder anschließbaren Energiespeicher. Dies hat den besonderen Vorteil, dass die Feststellvorrichtung zum Bewirken wenigstens eines Umschaltvorganges von dem Arretierzustand in den Freigabezustand oder von dem Freigabezustand in den Arretierzustand mit wenigstens einem Teil der in dem Energiespeicher gespeicherten Energie beaufschlagbar ist, oder dass die Feststellvorrichtung mit wenigstens einem Teil der in dem Energiespeicher gespeicherten Energie beaufschlagbar ist, um die Feststellvorrichtung in dem Arretierzustand oder in den Freigabezustand zu halten. Der Energiespeicher kann dazu ausgebildet sein, mechanische Energie zu speichern. Insoweit kann der Energiespeicher beispielsweise eine Feder beinhalten. Alternativ oder zusätzlich kann auch vorgesehen sein, dass der Energiespeicher dazu ausgebildet ist, elektrische Energie zu speichern. Beispielsweise kann der Energiespeicher einen Akku beinhalten. Es können insbesondere auch zwei oder mehr Energiespeicher, insbesondere auch unterschiedlichen Typs, vorhanden sein.

Eine solche Ausführung hat den ganz besonderen Vorteil, dass das Gelenk auch nach Eintreten eines Fehlerfalles, nämlich beispielsweise wenn die von außen über eine Energieleitung verlaufende Energieversorgung unterbrochen ist, - je nach Anforderung und insbesondere auch automatisch - arretiert oder freigegeben werden kann. Beispielsweise ermöglicht es eine solche Ausführung, eine unkontrollierte und ungewollte Bewegung der mittels des Gelenks verbundenen Träger im Fall eines Abrisses eines oder mehrerer der zu dem Gelenk verlaufenden Kabel zu verhindern, indem die Feststellvorrichtung, insbesondere automatisch, unter Verwendung der in dem Energiespeicher gespeicherten Energie von dem Freigabezustand in den Arretierzustand geschaltet wird. Es ist bei einer anderen Ausführung auch möglich, die Feststellvorrichtung mittels der in dem Energiespeicher gespeicherten Energie in einem Fehlerfall in dem aktuellen Zustand zu halten.

Der Energiespeicher kann dazu ausgebildet sein, elektrische Energie zu speichern. Beispielsweise kann der Energiespeicher als Akku oder als Batterie oder als Kondensator ausgebildet sein. Bei einer besonderen Ausführung ist eine elektronische Steuerungsvorrichtung vorhanden, die die Feststellvorrichtung im Bedarfsfall mit elektrischer Energie aus dem zum Speichern elektrischer Energie ausgebildeten Energiespeicher beaufschlagt. Hierzu kann die Steuerungsvorrichtung wenigstens einen Schalter beinhalten, wobei durch Schließen des Schalters eine elektrische Verbindung zwischen dem Energiespeicher und der Feststellvorrichtung herstellbar ist.

Bei einer besonderen Ausführung ist der Energiespeicher dazu ausgebildet, Energie mechanisch zu speichern. Beispielsweise kann der Energiespeicher wenigstens eine Feder aufweisen, um Energie in Form von Spannenergie zu speichern. Die Feder kann insbesondere in der Weise angeschlossen sein, dass sie beim Umschalten der Feststellvorrichtung mittels einer über die Energieleitung betriebenen Umschaltvorrichtung, die beispielsweise ein Hubmagnet sein kann, gespannt wird. Insbesondere kann außerdem ein zusätzlicher Energiespeicher, insbesondere zum Speichern elektrischer Energie, vorhanden sein, mit dessen gespeicherter Energie die Umschaltvorrichtung, insbesondere ein Hubmagnet, im Falle der Unterbrechung der Energieleitung wenigstens für einen Umschaltvorgang betreibbar ist.

Auch bei einer Ausführung mit einem Energiespeicher, der dazu ausgebildet ist, Energie mechanisch zu speichern, kann vorteilhaft eine mechanische und/oder elektronisch arbeitende Steuerungsvorrichtung, vorhanden sein, die die Feststellvorrichtung im Bedarfsfall unter Verwendung der gespeicherten Energie umschaltet.

Vorzugsweise ist die Steuerungsvorrichtung mit Energie aus dem Energiespeicher betrieben oder betreibbar. Eine solche Ausführung hat den besonderen Vorteil, dass die Steuerungsvorrichtung auch im Fehlerfall, nämlich insbesondere wenn die Energieversorgung über die Energieleitung unterbrochen ist, noch arbeiten und einem Umschaltvorgang bewirken kann. Alternativ ist es zu diesem Zweck auch möglich, dass zum Betreiben der Steuerungsvorrichtung ein weiterer Energiespeicher vorhanden ist.

Bei einer besonderen Ausführung kann die Feststellvorrichtung unter Verwendung der in dem Energiespeicher gespeicherten Energie umgeschaltet werden, wenn eine Energiezufuhr über die Energieleitung unterbrochen ist. Beispielsweise kann eine Unterbrechung der Energiezufuhr durch einen Abriss eines oder mehrerer Zuleitungskabel zum Gelenk hervorgerufen sein.

Insbesondere kann vorteilhaft vorgesehen sein, dass eine Steuerungsvorrichtung die Feststellvorrichtung automatisch unter Verwendung der in dem Energiespeicher gespeicherten Energie von dem Freigabezustand in den Arretierzustand umschaltet, sobald die Energiezufuhr über die Energieleitung zu der Feststellvorrichtung und/oder zu dem Antriebsmotor unterbrochen wird. Es ist insbesondere auch möglich, dass eine Steuerungsvorrichtung die Feststellvorrichtung automatisch unter Verwendung der in dem Energiespeicher gespeicherten Energie von dem Arretierzustand in den Freigabezustand umschaltet, sobald die Energiezufuhr über die Energieleitung zu der Feststellvorrichtung und/oder zu dem Antriebsmotor unterbrochen wird.

Insbesondere ist es auch möglich, dass im Fehlerfall zeitlich beabstandet mehrere Umschaltvorgänge erfolgen. Beispielsweise kann vorgesehen sein, dass das Gelenk, insbesondere automatisch, zunächst arretiert wird, um unkontrollierte und/oder ungewollte Bewegungen der mittels des Gelenks verbundenen Träger zu verhindern, und dass zeitlich danach, zum Beispiel für einen Reparaturvorgang, ein weiteres Umschalten in den Freigabezustand unter Verwendung der gespeicherten Energie erfolgt.

Bei einer besonderen Ausführung ist die Feststellvorrichtung derart ausgebildet, dass der jeweils gewählte Schaltzustand auch dann zuverlässig erhalten bleibt, wenn die Stromversorgung ausfällt oder abgeschaltet ist. Beispielsweise kann die Feststellvorrichtung hierzu eine Permanentmagnetanordnung aufweisen, die ein Verriegelungsbauteil nach einem Umschaltvorgang, bei dem von der Freigabestellung in die Verriegelungsstellung geschaltet wurde, in der Verriegelungsstellung hält und die das Verriegelungsbauteil nach einem Umschaltvorgang, bei dem von der Verriegelungsstellung in die Freigabestellung geschaltet wurde, in der Freigabestellung hält, wobei die Umschaltvorrichtung bei einem Umschaltvorgang dem von der Permanentmagnetanordnung verursachten Magnetfeld ein Umschaltmagnetfeld überlagert.

Eine solche Feststellvorrichtung hat den Vorteil, dass sie unabhängig von einer Stromversorgung bistabil ist, weil ein eingestellter Schaltzustand (Verriegelungsstellung oder Freigabestellung) von der Permanentmagnetanordnung zuverlässig solange erhalten wird, bis das Verriegelungsbauteil in den jeweils anderen Schaltzustand umgeschaltet wird.

Bei einer besonderen Ausführung ist das motorisierte Gelenk dazu ausgebildet, zwei Träger derart zu verbinden, dass die Ebene, in der sich einer der Träger bewegt, und die Ebene, in der sich der andere Träger bewegt, stets parallel zueinander angeordnet sind.

Bei einer anderen Ausführung ist das Gelenk dazu ausgebildet, zwei Träger derart zu verbinden, dass die Ebene, in der sich einer der Träger bewegt, stets senkrecht zu dem anderen Träger angeordnet ist.

Insbesondere kann das Gelenk als Scharniergelenk ausgebildet sein.

Von besonderem Vorteil ist ein programmierbarer Bewegungsautomat mit zwei Trägern, die mittels eines erfindungsgemäßen motorisierten Gelenks relativ zueinander beweglich verbunden sind. Hierbei kann insbesondere vorteilhaft vorgesehen sein, dass einer der Träger direkt oder indirekt drehfest mit einem Stator des Antriebsmotors und/oder einem Antriebsmotorgehäuse des Antriebsmotors verbunden ist, während der andere der Träger drehfest an ein Abtriebselement des Spannungswellengetriebes angekoppelt ist. Die zwei mittels des motorisierten Gelenks beweglich verbundenen Träger können beispielsweise Teil eines Roboterarmes sein.

In der Zeichnung ist der Erfindungsgegenstand beispielhaft und schematisch dargestellt und wird anhand der Figuren nachfolgend beschrieben, wobei gleiche oder gleich wirkende Elemente auch in unterschiedlichen Ausführungsbeispielen zumeist mit denselben Bezugszeichen versehen sind. Dabei zeigen:
- Fig. 1: ein erstes Ausführungsbeispiel eines motorisierten Gelenks zum Verbinden von zwei relativ zueinander beweglichen Trägern, das nicht zur Erfindung gehört,
- Fig. 2: ein zweites Ausführungsbeispiel eines motorisierten Gelenks gemäß der vorliegenden Erfindung zum Verbinden von zwei relativ zueinander befindlichen Trägern,
- Fig. 3: ein drittes Ausführungsbeispiel eines motorisierten Gelenks gemäß der vorliegenden Erfindung zum Verbinden von zwei relativ zueinander beweglichen Trägern,
- Fig. 4: ein viertes Ausführungsbeispiel eines motorisierten Gelenks gemäß der vorliegenden Erfindung zum Verbinden von zwei relativ zueinander beweglichen Trägern, und
- Fig. 5: ein fünftes Ausführungsbeispiel eines motorisierten Gelenks zum Verbinden von zwei relativ zueinander beweglichen Trägern, das nicht zur Erfindung gehört.

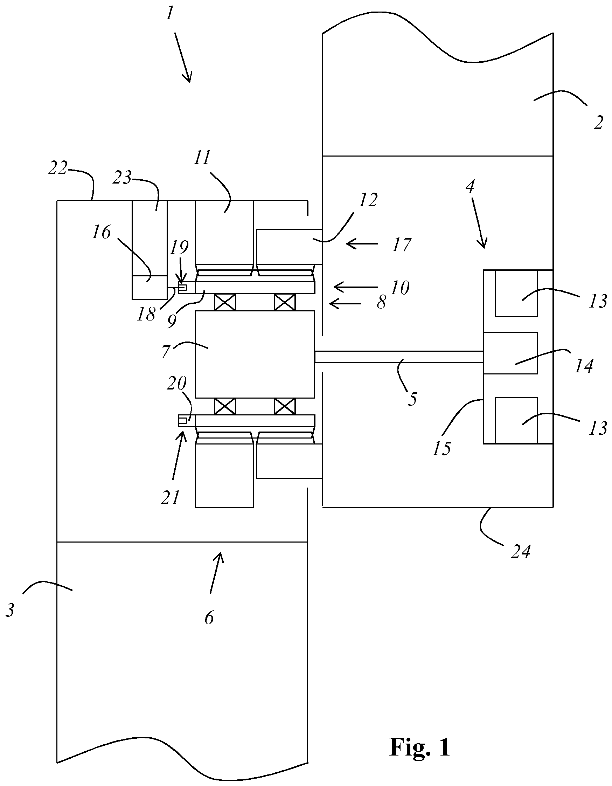

Figur 1 zeigt ein erstes Ausführungsbeispiel eines motorisierten Gelenks 1 zum gelenkigen Verbinden eines ersten Trägers 2 mit einem zweiten Träger 3 eines programmierbaren Bewegungsautomaten. Das motorisierte Gelenk 1 beinhaltet einen Antriebsmotor 4 mit einer Abtriebswelle 5, sowie ein dem Antriebsmotor 4 triebtechnisch nachgeschaltes Getriebe 6. Das Getriebe 6 ist als Spannungswellengetriebe ausgebildet.

Das motorisierte Gelenk 1 weist ein erstes Gehäuseteil 24 und ein zweites Gehäuseteil 22 auf. Das erste Gehäuseteil 24 ist starr mit dem ersten Träger 2 verbunden, während das zweite Gehäuseteil 22 starr mit dem zweiten Träger 3 verbunden ist. Es ist alternativ auch möglich, dass ein Gehäuse des ersten Trägers zusätzlich auch als erstes Gehäuseteil fungiert und/oder dass ein Gehäuse des zweiten Trägers zusätzlich auch als zweites Gehäuseteil fungiert. Bei diesem Ausführungsbeispiel ist der Antriebsmotor 4 in dem ersten Gehäuseteil 24 angeordnet, während das Getriebe 6 und die Feststellvorrichtung 16 in dem zweiten Gehäuseteil 22 angeordnet sind.

Das Getriebe 6 weist ein drehfest mit der Abtriebswelle 5 des Antriebsmotors 4 verbundenes Antriebselement 7, nämlich einen Wellengenerator auf. Der Wellengenerator ist mittels eines radialflexiblen Wälzlagers 8 in einer radialflexiblen, außenverzahnten Büchse 9 gelagert, die ein Zwischenelement 10 des Getriebes 6 bildet. Das Antriebselement 7 ist elliptisch ausgebildet und überträgt seine elliptische Form über das radialflexible Wälzlager 8 auf die radialflexible außenverzahnte Büchse 9, die auf einander gegenüberliegenden Seiten entlang der Hochachse der Ellipse in Zahneingriff mit einem ersten, starren, innenverzahnten Stützring 11 steht. Der erste Stützring 11 ist über das zweite Gehäuseteil 22 drehfest mit dem zweiten Träger 3 verbunden. Der erste Stützring 11 kann insbesondere dieselbe Zähnezahl aufweisen, wie die radialflexible außenverzahnte Büchse 9.

Darüber hinaus weist das Getriebe 6 einen zweiten starren, innenverzahnten Stützring 12 auf, der ebenfalls in Zahneingriff mit der radialflexiblen außenverzahnten Büchse 9 steht. Der zweite Stützring 12 weist eine höhere Anzahl von Zähnen auf, als die radialflexible außenverzahnte Büchse 9, so dass es bei einer Drehung des Antriebselements 7 automatisch zu einer Relativdrehung des zweiten Stützrings 12 relativ zu der radialflexiblen außenverzahnten Büchse 9 kommt.

Der zweite Stützring 12 ist über das erste Gehäuseteil 24 drehfest mit dem ersten beweglichen Träger 2 verbunden.

Der Antriebsmotor 4 beinhaltet einen Stator 13 und einen Rotor 14. Der Rotor 14 ist drehfest mit der Abtriebswelle 5 verbunden. Ein Antriebsmotorgehäuse 15 ist drehfest in dem ersten Gehäuseteil 24 befestigt. Der Stator 13 ist ortsfest in dem Antriebsmotorgehäuse 15 angeordnet.

Mittels des Antriebsmotors 4 kann das Antriebselement 7 in Rotation versetzt werden, was zu einer Relativdrehung des mit dem ersten Träger 2 verbundenen zweiten Stützrings 12 führt, so dass sich der erste Träger 2 und der zweite Träger 3 relativ zueinander bewegen.

Das motorisierte Gelenk 1 weist außerdem eine Feststellvorrichtung 16 auf, die dazu ausgebildet und angeordnet ist, das Gelenk beispielsweise im Notfall und/oder im Reparaturfall zu versteifen. Bei dieser Ausführung wirkt die mittels eines Halters 23 drehfest mit dem zweiten Gehäuseteil 22 verbundene Feststellvorrichtung 16 auf die als Zwischenelement 10 fungierende radialflexible außenverzahnte Büchse 9. Dies ist in der Weise realisiert, dass ein axial beweglicher Sperrenstift 18 in eine Rastausnehmung 19 eines als Sperrring 21 ausgebildeten Sperrmittels 20, das reibschlüssig mit der radialflexiblen, außenverzahnten Büchse 9 verbunden ist, eingreift. Zum Lösen der Sperrvorrichtung wird das freie Ende des Sperrenstiftes 18 axial aus der Rastausnehmung 19 heraus bewegt. Das Sperrmittel 20 weist auf seinem Außenumfang verteilt mehrere Rastausnehmungen 19 auf, so dass ein Eingreifen des Sperrenstiftes in unterschiedlichen Drehstellungen ermöglicht ist.

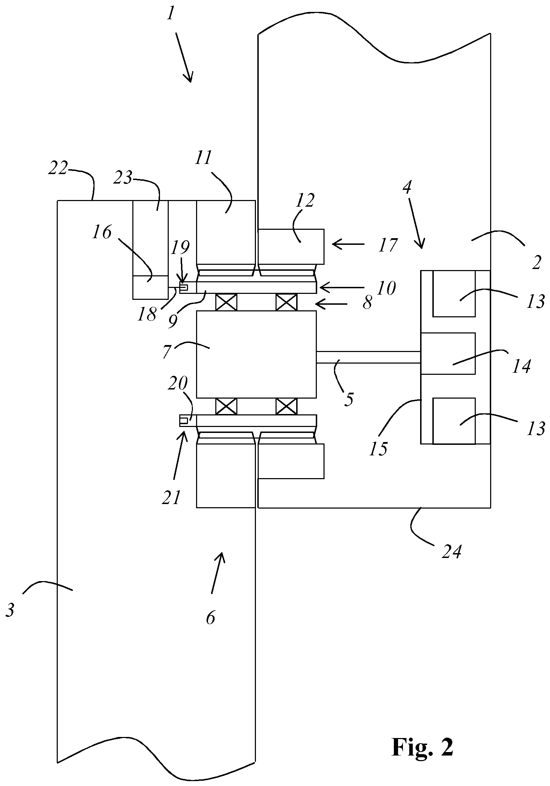

Figur 2 zeigt ein zweites Ausführungsbeispiel eines motorisierten Gelenks 1 zum gelenkigen Verbinden eines ersten Trägers 2 mit einem zweiten Träger 3 eines programmierbaren Bewegungsautomaten. Bei diesem Ausführungsbeispiel sind der Antriebsmotor 4 und ein Teil des Getriebes 6 in dem ersten Gehäuseteil 24 angeordnet, während der andere Teil des Getriebes 6 und die Feststellvorrichtung 16 in dem zweiten Gehäuseteil 22 angeordnet sind.

Bei diesem Ausführungsbeispiel fungiert ein Gehäuse des ersten Trägers zusätzlich auch als erstes Gehäuseteil 24 und ein Gehäuse des zweiten Trägers zusätzlich auch als zweites Gehäuseteil 22.

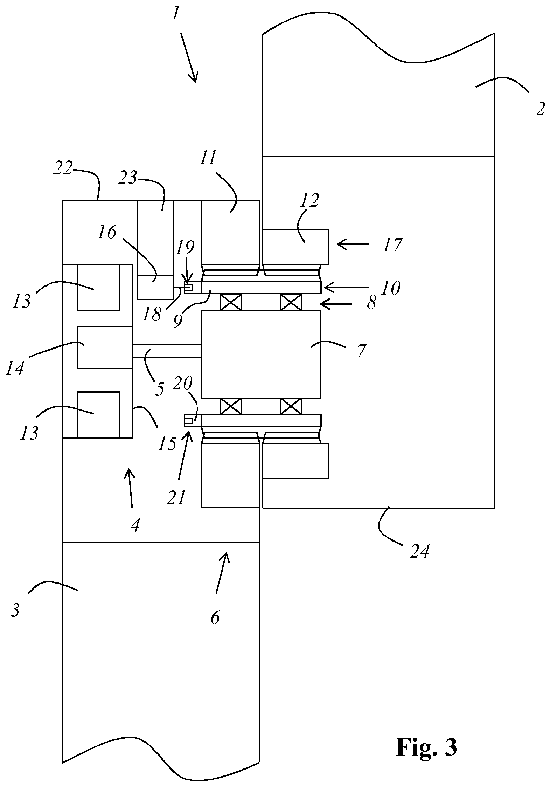

Figur 3 zeigt ein drittes Ausführungsbeispiel eines motorisierten Gelenks 1 zum gelenkigen Verbinden eines ersten Trägers 2 mit einem zweiten Träger 3 eines programmierbaren Bewegungsautomaten. Bei diesem Ausführungsbeispiel ist ein Teil des Getriebes 6 in dem ersten Gehäuseteil 24 angeordnet, während der Antriebsmotor 4 und der andere Teil des Getriebes 6 sowie die Feststellvorrichtung 16 in dem zweiten Gehäuseteil 22 angeordnet sind.

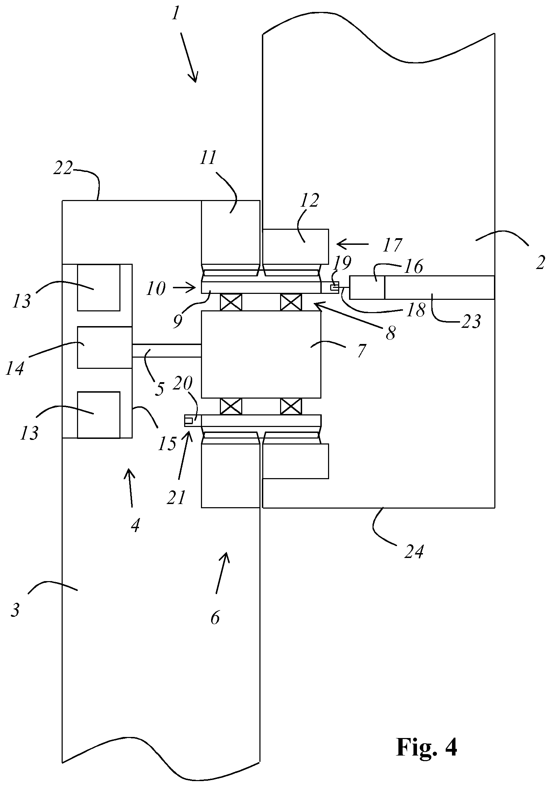

Figur 4 zeigt ein viertes Ausführungsbeispiel eines motorisierten Gelenks 1 zum gelenkigen Verbinden eines ersten Trägers 2 mit einem zweiten Träger 3 eines programmierbaren Bewegungsautomaten. Bei diesem Ausführungsbeispiel sind ein Teil des Getriebes 6 und die Feststellvorrichtung 16 in dem ersten Gehäuseteil 24 angeordnet, während der Antriebsmotor 4 und der andere Teil des Getriebes 6 in dem zweiten Gehäuseteil 22 angeordnet sind.

Bei diesem Ausführungsbeispiel fungiert ein Gehäuse des ersten Trägers zusätzlich auch als erstes Gehäuseteil 24 und ein Gehäuse des zweiten Trägers zusätzlich auch als zweites Gehäuseteil 22.

Alternativ zu der genannten Ausführung der Feststellvorrichtung könnte auch vorgesehen sein, dass ein in radialer Richtung beweglicher Sperrenstift 18 in eine Rastausnehmung 19 eines reibschlüssig mit dem zweiten Stützring 12 verbundenen Sperrmittels 20 eingreift. Zum Lösen der Feststellvorrichtung wird der Sperrenstift 18 bei einer solchen Ausführung, beispielsweise durch Magnetkraft, radial nach außen bewegt, wodurch das freie Ende des Sperrenstiftes 18 und die Rastausnehmung 19 außer Eingriff kommen.

Die Feststellvorrichtung 16 könnte, insbesondere in Abwandlung der in den Figuren 1 bis 3 gezeigten Ausführungen, beispielsweise drehfest in dem zweiten Gehäuseteil 22 und drehfest zu dem zweiten Träger 3 angeordnet. Insoweit könnte ein bei einem Bremsvorgang auftretendes Bremsmoment unmittelbar auf das zweite Gehäuseteil 22 abgeleitet werden, ohne dass es zu einer Belastung der übrigen Bauteile des Getriebes 6 kommt. Insbesondere wäre die Abtriebswelle 5 des Antriebsmotors 4 bei einem Abbremsvorgang von den durch das Abbremsen hervorgerufenen Drehmomenten entkoppelt.

Auch hierbei könnte das Sperrmittel 20 auf seinem Außenumfang verteilt mehrere Rastausnehmungen 19 aufweisen, so dass ein Eingreifen des Sperrenstiftes in unterschiedlichen Drehstellungen des zweiten Stützrings 12 ermöglicht ist.

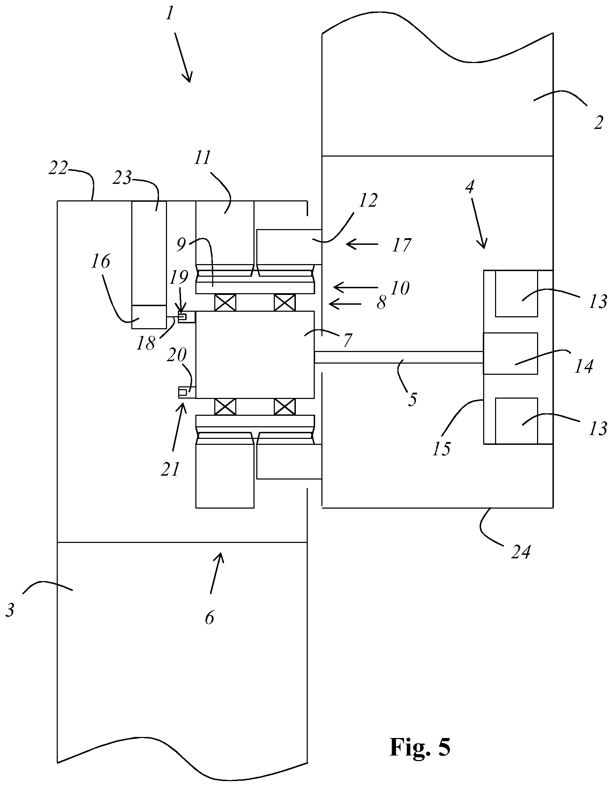

Figur 5 zeigt ein fünftes Ausführungsbeispiel eines motorisierten Gelenks 1 zum gelenkigen Verbinden eines ersten Trägers 2 mit einem zweiten Träger 3 eines programmierbaren Bewegungsautomaten. Bei diesem Ausführungsbeispiel ist der Antriebsmotor 4 in dem ersten Gehäuseteil 24 angeordnet, während das Getriebe 6 und die Feststellvorrichtung 16 in dem zweiten Gehäuseteil 22 angeordnet sind. Der erste Stützring 11 ist über das zweite Gehäuseteil 22 mit dem zweiten Träger 3 starr verbunden, während der zweite Stützring über das erste Gehäuseteil 24 starr mit dem ersten Träger 2 verbunden ist.

Bei dieser Ausführung wirkt die mittels eines Halters 23 drehfest mit dem zweiten Gehäuseteil 22 verbundene Feststellvorrichtung 16 auf das Antriebselement 7, nämlich den Wellengenerator. Dies ist in der Weise realisiert, dass ein axial beweglicher Sperrenstift 18 in eine Rastausnehmung 19 eines als Sperrring 21 ausgebildeten Sperrmittels 20, das, beispielsweise reibschlüssig, mit dem Antriebselement 7 verbunden ist, eingreift. Zum Lösen der Sperrvorrichtung wird das freie Ende des Sperrenstiftes 18 axial aus der Rastausnehmung 19 heraus bewegt.

### Bezugszeichenliste:

- 1: Motorisiertes Gelenk
- 2: Erster Träger
- 3: Zweiter Träger
- 4: Antriebsmotor
- 5: Abtriebswelle
- 6: Getriebe
- 7: Antriebselement
- 8: Radialflexibles Wälzlager
- 9: Radialflexible, außenverzahnte Büchse
- 10: Zwischenelement
- 11: Erster Stützring
- 12: Zweiter Stützring
- 13: Stator
- 14: Rotor
- 15: Antriebsmotorgehäuse
- 16: Feststellvorrichtung
- 17: Abtriebselement
- 18: Sperrenstift
- 19: Rastausnehmung
- 20: Sperrmittel
- 21: Sperrring
- 22: Zweites Gehäuseteil
- 23: Halter
- 24: Erstes Gehäuseteil

## Patentansprüche

1. Motorisiertes Gelenk (1) zum Verbinden von zwei relativ zueinander beweglichen Trägern (2, 3) eines programmierbaren Bewegungsautomaten, das zwei relativ zueinander bewegliche Gehäuseteile (22, 24), einen Antriebsmotor (4) und ein dem Antriebsmotor (4) triebtechnisch nachgeschaltetes Getriebe (6) aufweist, das ein Spannungswellengetriebe ist, **dadurch gekennzeichnet, dass** das Spannungswellengetriebe als Ringgetriebe mit einem sich in beide Gehäuseteile erstreckenden Antriebselement (7), nämlich einem Wellengenerator, ausgebildet ist und dass ein erster innenverzahnter Stützring (11) des Getriebes (6) in einem der Gehäuseteile (22, 24) angeordnet ist und ein zweiter innenverzahnter Stützring (12) des Getriebes (6) in dem anderen Gehäuseteil (22, 24) angeordnet ist.

2. Motorisiertes Gelenk (1) nach Anspruch 1, **gekennzeichnet durch** eine Feststellvorrichtung (16), die dazu ausgebildet und angeordnet ist, das Gelenk (1) zu arretieren.

3. Motorisiertes Gelenk (1) nach Anspruch 2, **dadurch gekennzeichnet, dass**
a. die Feststellvorrichtung (16) dazu ausgebildet und angeordnet ist, unmittelbar ein Getriebebauteil abzubremsen oder dass
b. die Feststellvorrichtung (16) dazu ausgebildet und angeordnet ist, unmittelbar ein Getriebebauteil abzubremsen, wobei die Feststellvorrichtung (16) in demselben Gehäuseteil (22, 24) angeordnet ist, wie das unmittelbar abzubremsende Bauteil des Getriebes (6).

4. Motorisiertes Gelenk (1) nach Anspruch 2, **dadurch gekennzeichnet, dass**
a. die Feststellvorrichtung (16) dazu ausgebildet und angeordnet ist, unmittelbar den Antriebsmotor (4) oder eine Abtriebswelle (5) des Antriebsmotors (6) abzubremsen oder dass
b. die Feststellvorrichtung (16) dazu ausgebildet und angeordnet ist, unmittelbar den Antriebsmotor (4) oder eine Abtriebswelle (5) des Antriebsmotors (4) abzubremsen, wobei die Feststellvorrichtung (16) in demselben Gehäuseteil angeordnet ist, wie der Antriebsmotor (4) oder in demselben Gehäuseteil wie die Abtriebswelle (5).

5. Motorisiertes Gelenk nach einem der Ansprüche 1 bis 4, **dadurch gekennzeichnet, dass** das mittels der Feststellvorrichtung (16) abbremsbare und arretierbare Getriebebauteil der Wellengenerator des Spannungswellengetriebes ist oder dass das mittels des Feststellvorrichtung (16) abbremsbare und arretierbare Getriebebauteil ein Flexspline des Spannungswellengetriebes ist oder dass das mittels des Feststellvorrichtung (16) abbremsbare und arretierbare Getriebebauteil ein Circularspline oder ein Dynamicspline des Spannungswellengetriebes ist.

6. Motorisiertes Gelenk (1) nach einem der Ansprüche 2 bis 5, **dadurch gekennzeichnet, dass**
a. die Feststellvorrichtung (16) im zugeschalteten Zustand bei Auftreten eines abtriebsseitigen Drehmomentes mit einem Wert über einem vorgegebenen oder vorgebbaren Wert zur Vermeidung einer Beschädigung eines Abtriebselements (7) des Spannungswellengetriebes und der weiteren im Kraftfluss liegenden Bauteile des motorisierten Gelenks (1) eine Bewegung des mittels des Feststellvorrichtung unmittelbar arretierten Bauteils zulässt, oder dass
b. die Feststellvorrichtung (16) im zugeschalteten Zustand bei Auftreten eines abtriebsseitigen Drehmomentes mit einem Wert über einem vorgegebenen oder vorgebbaren Wert zur Vermeidung einer Beschädigung eines Abtriebselements (7) des Spannungswellengetriebes und der weiteren im Kraftfluss liegenden Bauteile des motorisierten Gelenks (1) eine Bewegung des mittels des Feststellvorrichtung (16) unmittelbar arretierten Bauteils zulässt, wobei der vorgegebene oder vorgebbare Wert dem maximal zulässigen Betriebsdrehmoment, das an dem zu arretierenden Bauteil auftreten darf entspricht und/oder dass der vorgegebene Wert derart gewählt ist, dass eine Beschädigung des Gelenks (1) und/oder des Getriebes (6) ausgeschlossen ist.

7. Motorisiertes Gelenk (1) nach einem der Ansprüche 2 bis 6, **dadurch gekennzeichnet, dass** die Feststellvorrichtung (16) als reibschlüssige Bremse ausgebildet ist oder eine reibschlüssige Bremse aufweist.

8. Motorisiertes Gelenk (1) nach einem der Ansprüche 2 bis 7, **dadurch gekennzeichnet, dass** die Feststellvorrichtung (16) ein reibschlüssig mit dem mittels der Feststellvorrichtung (16) unmittelbar abbremsbaren Bauteil verbundenes Sperrmittel (20) aufweist, welches wenigstens ein Formschlussmittel aufweist, das im zugeschalteten Zustand der Feststellvorrichtung formschlüssig mit einem relativ zu einem Gehäuse oder einem Chassis drehfesten Gegenformschlussmittel zusammen wirkt.

9. Motorisiertes Gelenk (1) nach einem der Ansprüche 2 bis 8, **dadurch gekennzeichnet, dass** das motorisierte Gelenk (1) wenigstens einen an die Feststellvorrichtung (16) angeschlossenen oder anschließbaren Energiespeicher beinhaltet, wobei
a. die Feststellvorrichtung (16) zum Bewirken wenigstens eines Umschaltvorganges von dem Arretierzustand in den Freigabezustand oder von dem Freigabezustand in den Arretierzustand mit wenigstens einem Teil der in dem Energiespeicher gespeicherten Energie beaufschlagbar ist, oder wobei
b. die Feststellvorrichtung (16) mit wenigstens einem Teil der in dem Energiespeicher gespeicherten Energie beaufschlagbar ist, um die Feststellvorrichtung (16) in dem Arretierzustand oder in den Freigabezustand zu halten, oder wobei
c. der Energiespeicher dazu ausgebildet ist, mechanische Energie zu speichern, oder wobei
d. der Energiespeicher dazu ausgebildet ist, elektrische Energie zu speichern.

10. Motorisiertes Gelenk (1) nach Anspruch 9, **dadurch gekennzeichnet, dass** das motorisiertes Gelenk (1) eine Energieleitung aufweist, die von außen zugeführte Energie zum Betreiben und/oder Steuern der Feststellvorrichtung (16) und/oder des Antriebsmotors (4) transportiert, und dass die Feststellvorrichtung (16) unter Verwendung der in dem Energiespeicher gespeicherten Energie umschaltbar ist, wenn eine Energiezufuhr über die Energieleitung unterbrochen ist.

11. Motorisiertes Gelenk (1) nach einem der Ansprüche 1 bis 10, **dadurch gekennzeichnet, dass**
a. das Gelenk (1) dazu ausgebildet ist, zwei Träger (2, 3) derart zu verbinden, dass die Ebene, in der sich einer der Träger (2, 3) bewegt, und die Ebene, in der sich der andere Träger (2, 3) bewegt, stets parallel zueinander angeordnet sind, oder dass
b. das Gelenk (1) als Scharniergelenk ausgebildet ist
c. das Gelenk (1) dazu ausgebildet ist, zwei Träger (2, 3) derart zu verbinden, dass die Ebene, in der sich einer der Träger (2, 3) bewegt, stets senkrecht zu dem anderen Träger (2, 3) angeordnet ist.

12. Programmierbarer Bewegungsautomat mit zwei mittels eines motorisierten Gelenks (1) nach einem der Ansprüche 1 bis 11 relativ zueinander beweglich verbundenen Trägern (2,3).

13. Programmierbarer Bewegungsautomat nach Anspruch 12, **dadurch gekennzeichnet, dass**
a. einer der Träger (2, 3) direkt oder indirekt drehfest mit einem Stator des Antriebsmotors (4) und/oder einem Antriebsmotorgehäuse des Antriebsmotors (4) verbunden ist und dass der andere Träger (2, 3) drehfest an das Abtriebselement (7) des Getriebes (6) angekoppelt ist, und/oder dass
b. die zwei mittels des motorisierten Gelenks (1) beweglich verbundenen Träger (2, 3) Teil eines Roboterarmes sind.

14. Programmierbarer Bewegungsautomat nach Anspruch 12 oder 13, **dadurch gekennzeichnet, dass** das Gelenk (1) zwei relativ zueinander bewegliche Gehäuseteile (22, 24) aufweist, wobei
a. einer der Träger (2, 3) mit einem der Gehäuseteile (22, 24) fest verbunden ist und der andere Träger (2, 3) mit dem anderen Gehäuseteil (22, 24) fest verbunden ist, oder wobei
b. eines der Gehäuseteile (22, 24) Bestandteil eines der Träger (2, 3) ist oder wobei
c. eines der Gehäuseteile (22, 24) Bestandteil eines Gehäuses eines der Träger (2, 3) ist und das andere Gehäuseteil (22, 24) Bestandteil eines Gehäuses des anderen Trägers (2, 3) ist.

## Claims

1. Motorized joint (1) for connecting two carriers (2, 3), movable relative to one another, of a programmable automatic moving device which has two housing parts (22, 24) which are movable relative to one another, a drive motor (4) and a gear mechanism (6) which is connected downstream of the drive motor (4) in drive terms and is a strain wave gear mechanism, **characterized in that** the strain wave gear mechanism is configured as a ring gear mechanism with a drive element (7), namely a wave generator, which extends into the two housing parts, and **in that** a first internally toothed supporting ring (11) of the gear mechanism (6) is arranged in one of the housing parts (22, 24), and a second internally toothed supporting ring (12) of the gear mechanism (6) is arranged in the other housing part (22, 24).

2. Motorized joint (1) according to Claim 1, **characterized by** a fixing apparatus (16) which is configured and arranged to lock the joint (1).

3. Motorized joint (1) according to Claim 2, **characterized in that**
a. the fixing apparatus (16) is configured and arranged to brake a gear mechanism component directly, or **in that**
b. the fixing apparatus (16) is configured and arranged to brake a gear mechanism component directly, the fixing apparatus (16) being arranged in the same housing part (22, 24) as that component of the gear mechanism (6) which is to be braked directly.

4. Motorized joint (1) according to Claim 2, **characterized in that**
a. the fixing apparatus (16) is configured and arranged to brake the drive motor (4) or an output shaft (5) of the drive motor (6) directly, or **in that**
b. the fixing apparatus (16) is configured and arranged to brake the drive motor (4) or an output shaft (5) of the drive motor (4) directly, the fixing apparatus (16) being arranged in the same housing part as the drive motor (4) or in the same housing part as the output shaft (5).

5. Motorized joint according to one of Claims 1 to 4, **characterized in that** the gear mechanism component which can be braked and locked by means of the fixing apparatus (16) is the wave generator of the strain wave gear mechanism, or **in that** the gear mechanism component which can be braked and locked by means of the fixing apparatus (16) is a flexspline of the strain wave gear mechanism, or **in that** the gear mechanism component which can be braked and locked by means of the fixing apparatus (16) is a circular spline or a dynamic spline of the strain wave gear mechanism.

6. Motorized joint (1) according to one of Claims 2 to 5, **characterized in that**,
a. in the switched-on state in the case of the occurrence of an output-side torque with a value above a predefined or predefinable value, the fixing apparatus (16) permits a movement of the component which is locked directly by means of the fixing apparatus in order to avoid damage of an output element (7) of the strain wave gear mechanism and the further components of the motorized joint (1) which lie in the power train, or **in that**,
b. in the switched-on state in the case of the occurrence of an output-side torque with a value above a predefined or predefinable value, the fixing apparatus (16) permits a movement of the component which is locked directly by means of the fixing apparatus (16) in order to avoid damage of an output element (7) of the strain wave gear mechanism and the further components of the motorized joint (1) which lie in the power train, the predefined or predefinable value corresponding to the maximum permissible operating torque which may occur at the component to be locked, and/or **in that** the predefined value is selected in such a way that damage of the joint (1) and/or of the gear mechanism (6) is ruled out.

7. Motorized joint (1) according to one of Claims 2 to 6, **characterized in that** the fixing apparatus (16) is configured as a friction brake or has a friction brake.

8. Motorized joint (1) according to one of Claims 2 to 7, **characterized in that** the fixing apparatus (16) has a locking means (20) which is connected in a frictionally locking manner to the component which can be braked directly by means of the fixing apparatus (16), which locking means (20) has at least one positively locking means which, in the switched-on state of the fixing apparatus, interacts in a positively locking manner with a mating positively locking means which is non-rotational relative to a housing or a chassis.

9. Motorized joint (1) according to one of Claims 2 to 8, **characterized in that** the motorized joint (1) contains at least one energy store which is connected or can be connected to the fixing apparatus (16),
a. it being possible for the fixing apparatus (16) to be loaded with at least part of the energy stored in the energy store in order to bring about at least one switchover operation from the locked state into the release state or from the release state into the locked state, or
b. it being possible for the fixing apparatus (16) to be loaded with at least part of the energy stored in the energy store, in order to hold the fixing apparatus (16) in the locked state or in the release state, or
c. the energy store being configured to store mechanical energy, or
d. the energy store being configured to store electrical energy.

10. Motorized joint (1) according to Claim 9, **characterized in that** the motorized joint (1) has an energy line which transports energy which is fed in from the outside for operating and/or controlling the fixing apparatus (16) and/or the drive motor (4), and **in that** the fixing apparatus (16) can be switched over with use of the energy which is stored in the energy store if an energy supply via the energy line is interrupted.

11. Motorized joint (1) according to one of Claims 1 to 10, **characterized in that**
a. the joint (1) is configured to connect two carriers (2, 3) in such a way that the plane, in which one of the carriers (2, 3) moves, and the plane, in which the other carrier (2, 3) moves, are always arranged parallel to one another, or **in that**
b. the joint (1) is configured as a hinged joint,
c. the joint (1) is configured to connect two carriers (2, 3) in such a way that the plane, in which one of the carriers (2, 3) moves, is always arranged perpendicular with respect to the other carrier (2, 3) .

12. Programmable automatic moving device with two carriers (2, 3) which are connected such that they can be moved relative to one another by means of a motorized joint (1) according to one of Claims 1 to 11.

13. Programmable automatic moving device according to Claim 12, **characterized in that**
a. one of the carriers (2, 3) is directly or indirectly connected fixedly to a stator of the drive motor (4) and/or a drive motor housing of the drive motor (4) for conjoint rotation, and **in that** the other carrier (2, 3) is coupled fixedly to the output element (7) of the gear mechanism (6) for conjoint rotation, and/or **in that**
b. the two carriers (2, 3) which are connected movably by means of the motorized joint (1) are part of a robot arm.

14. Programmable automatic moving device according to Claim 12 or 13, **characterized in that** the joint (1) has two housing parts (22, 24) which can be moved relative to one another,
a. one of the carriers (2, 3) being connected fixedly to one of the housing parts (22, 24), and the other carrier (2, 3) being connected fixedly to the other housing part (22, 24), or
b. one of the housing parts (22, 24) being a constituent part of one of the carriers (2, 3), or
c. one of the housing parts (22, 24) being a constituent part of a housing of one of the carriers (2, 3), and the other housing part (22, 24) being a constituent part of a housing of the other carrier (2, 3).

## Revendications

1. Articulation motorisée (1) pour relier deux supports (2, 3) mobiles l'un par rapport à l'autre d'un automate de déplacement programmable, qui présente deux parties de boîtier (22, 24) mobiles l'une par rapport à l'autre, un moteur d'entraînement (4) et un engrenage (6) monté en transmission en aval du moteur d'entraînement (4), qui est un engrenage à onde de déformation, **caractérisée en ce que** l'engrenage à onde de déformation est configuré sous forme d'engrenage annulaire avec un élément d'entraînement (7) s'étendant dans les deux parties de boîtier, à savoir un générateur d'ondes, et **en ce qu'**une première bague d'appui à denture intérieure (11) de l'engrenage (6) est agencée dans l'une des parties de boîtier (22, 24) et une deuxième bague d'appui à denture intérieure (12) de l'engrenage (6) est agencée dans l'autre partie de boîtier (22, 24).

2. Articulation motorisée (1) selon la revendication 1, **caractérisée par** un dispositif d'immobilisation (16) qui est configuré et agencé pour bloquer l'articulation (1) .

3. Articulation motorisée (1) selon la revendication 2, **caractérisée en ce que**
a. le dispositif d'immobilisation (16) est configuré et agencé pour freiner directement un composant d'engrenage, ou **en ce que**
b. le dispositif d'immobilisation (16) est configuré et agencé pour freiner directement un composant d'engrenage, le dispositif d'immobilisation (16) étant agencé dans la même partie de boîtier (22, 24) que le composant de l'engrenage (6) à freiner directement.

4. Articulation motorisée (1) selon la revendication 2, **caractérisée en ce que**
a. le dispositif d'immobilisation (16) est configuré et agencé pour freiner directement le moteur d'entraînement (4) ou un arbre de sortie (5) du moteur d'entraînement (6), ou **en ce que**
b. le dispositif d'immobilisation (16) est configuré et agencé pour freiner directement le moteur d'entraînement (4) ou un arbre de sortie (5) du moteur d'entraînement (4), le dispositif d'immobilisation (16) étant agencé dans la même partie de boîtier que le moteur d'entraînement (4) ou dans la même partie de boîtier que l'arbre de sortie (5).

5. Articulation motorisée selon l'une quelconque des revendications 1 à 4, **caractérisée en ce que** le composant d'engrenage pouvant être freiné et pouvant être bloqué au moyen du dispositif d'immobilisation (16) est le générateur d'ondes de l'engrenage à onde de déformation ou **en ce que** le composant d'engrenage pouvant être freiné et pouvant être bloqué au moyen du dispositif d'immobilisation (16) est un Flexspline de l'engrenage à onde de déformation ou **en ce que** le composant d'engrenage pouvant être freiné et pouvant être bloqué au moyen du dispositif d'immobilisation (16) est un Circular Spline ou un Dynamic Spline de l'engrenage à onde de déformation.

6. Articulation motorisée (1) selon l'une quelconque des revendications 2 à 5, **caractérisée en ce que**
a. le dispositif d'immobilisation (16), à l'état activé, permet un déplacement du composant bloqué directement au moyen du dispositif d'immobilisation en cas de survenue d'un couple côté sortie ayant une valeur supérieure à une valeur prédéterminée ou prédéterminable, pour éviter d'endommager un élément de sortie (7) de l'engrenage à onde de déformation et les autres composants de l'articulation motorisée (1) se trouvant dans le flux de force, ou **en ce que**
b. le dispositif d'immobilisation (16), à l'état activé, permet un déplacement du composant bloqué directement au moyen du dispositif d'immobilisation (16), en cas de survenue d'un couple côté sortie ayant une valeur supérieure à une valeur prédéterminée ou prédéterminable, pour éviter d'endommager un élément de sortie (7) de l'engrenage à onde de déformation et les autres composants de l'articulation motorisée (1) se trouvant dans le flux de force, la valeur prédéterminée ou prédéterminable correspondant au couple de fonctionnement maximal admissible, qui peut survenir au niveau du composant à bloquer et/ou la valeur prédéterminée étant choisie de telle sorte qu'un endommagement de l'articulation (1) et/ou de l'engrenage (6) est exclu.

7. Articulation motorisée (1) selon l'une quelconque des revendications 2 à 6, **caractérisée en ce que** le dispositif d'immobilisation (16) est configuré sous forme de frein à friction ou présente un frein à friction.

8. Articulation motorisée (1) selon l'une quelconque des revendications 2 à 7, **caractérisée en ce que** le dispositif d'immobilisation (16) présente un moyen d'arrêt (20) relié par friction au composant pouvant être freiné directement au moyen du dispositif d'immobilisation (16), qui présente au moins un moyen à complémentarité de forme qui, à l'état activé du dispositif d'immobilisation, coopère par complémentarité de forme avec un moyen à complémentarité de forme opposé solidaire en rotation par rapport à un boîtier ou à un châssis.

9. Articulation motorisée (1) selon l'une quelconque des revendications 2 à 8, **caractérisée en ce que** l'articulation motorisée (1) comprend au moins un accumulateur d'énergie raccordé ou raccordable au dispositif d'immobilisation (16),
a. le dispositif d'immobilisation (16) pouvant être alimenté avec au moins une partie de l'énergie stockée dans l'accumulateur d'énergie pour effectuer au moins une opération de commutation de l'état de blocage à l'état de libération ou de l'état de libération à l'état de blocage, ou
b. le dispositif d'immobilisation (16) pouvant être alimenté avec au moins une partie de l'énergie stockée dans l'accumulateur d'énergie afin de maintenir le dispositif d'immobilisation (16) dans l'état de blocage ou dans l'état de libération, ou
c. l'accumulateur d'énergie étant configuré pour stocker de l'énergie mécanique, ou
d. l'accumulateur d'énergie étant configuré pour stocker de l'énergie électrique.

10. Articulation motorisée (1) selon la revendication 9, **caractérisée en ce que** l'articulation motorisée (1) présente une conduite d'énergie qui transporte de l'énergie amenée de l'extérieur pour faire fonctionner et/ou commander le dispositif d'immobilisation (16) et/ou le moteur d'entraînement (4), et **en ce que** le dispositif d'immobilisation (16) peut être commuté en utilisant l'énergie stockée dans l'accumulateur d'énergie lorsqu'une amenée d'énergie par le biais de la conduite d'énergie est interrompue.

11. Articulation motorisée (1) selon l'une quelconque des revendications 1 à 10, **caractérisée en ce que**
a. l'articulation (1) est configurée pour relier deux supports (2, 3) de telle sorte que le plan dans lequel se déplace l'un des supports (2, 3) et le plan dans lequel se déplace l'autre support (2, 3) sont toujours agencés parallèlement l'un à l'autre, ou **en ce que**
b. l'articulation (1) est configurée sous forme d'articulation à charnière,
c. l'articulation (1) est configurée pour relier deux supports (2, 3) de telle sorte que le plan dans lequel se déplace l'un des supports (2, 3) est toujours agencé perpendiculairement à l'autre support (2, 3).

12. Automate de déplacement programmable comprenant deux supports (2, 3) reliés de manière mobile l'un par rapport à l'autre au moyen d'une articulation motorisée (1) selon l'une quelconque des revendications 1 à 11.

13. Automate de déplacement programmable selon la revendication 12, **caractérisé en ce que**
a. l'un des supports (2, 3) est relié directement ou indirectement de manière solidaire en rotation à un stator du moteur d'entraînement (4) et/ou à un boîtier de moteur d'entraînement du moteur d'entraînement (4) et **en ce que** l'autre support (2, 3) est couplé de manière solidaire en rotation à l'élément de sortie (7) de l'engrenage (6), et/ou **en ce que**
b. les deux supports (2, 3) reliés de manière mobile au moyen de l'articulation motorisée (1) font partie d'un bras de robot.

14. Automate de déplacement programmable selon la revendication 12 ou 13, **caractérisé en ce que** l'articulation (1) présente deux parties de boîtier (22, 24) mobiles l'une par rapport à l'autre,
a. l'un des supports (2, 3) étant relié de manière fixe à l'une des parties de boîtier (22, 24) et l'autre support (2, 3) étant relié de manière fixe à l'autre partie de boîtier (22, 24), ou
b. l'une des parties de boîtier (22, 24) étant un constituant de l'un des supports (2, 3) ou
c. l'une des parties de boîtier (22, 24) étant un constituant d'un boîtier de l'un des supports (2, 3) et l'autre partie de boîtier (22, 24) étant un constituant d'un boîtier de l'autre support (2, 3).
